# EUROPEAN PATENT APPLICATION

(11) **EP 1 650 958 A1**
(43) Date of publication of application: **26.04.2006**
(21) Application number: 05022814.7
(22) Date of filing: 19.10.2005
(51) Int. Cl.: H04N 5/232

(54) **Auto focus system**

(30) Priority: 22.10.2004 JP 2004308689
(71) Applicant: Fujinon Corporation, Saitama-shi, Saitama (JP)
(72) Inventor: Ooka, Tsutomu, Saitama-shi, Saitama (JP); Kanayama, Atsushi, Saitama-shi, Saitama (JP)
(74) Representative: Klunker, Hans-Friedrich

(57) **Abstract**

According to an aspect of the present invention, movement of the AF area by the AF area operation device (14) can be made ineffective by the switching device (32), and thereby, even if the operator moves the manual operation member (30) by mistake, the AF area does not move, and the AF area can be securely kept at a predetermined position. According to another aspect of the present invention, it is possible to instantaneously return the AF area which has been moved to a position different from the initial position, to the initial position by the reset device (34).

## Description

### BACKGROUND OF THE INVENTION

### Field of the Invention

The present invention relates to an auto focus system, and in particular to an auto focus system capable of moving an AF area to be targeted by auto focus (AF) within the image-taking area of a camera to a desired position.

### Description of the Related Art

In an image pickup system in which an image of an object is converted to electric signals (image signals) by an image-taking device (such as a CCD) like a TV camera, a contrast method is adopted in general as a method for auto focus (hereinafter referred to as AF). The contrast method is a method in which contrast of the object image is detected from the image signals acquired by the image sensor, and focusing is automatically performed to obtain the best focus condition by controlling the focus of the image taking lenses so that the contrast may be the highest.

In AF adopting the contrast method, in many cases, the entire object within the image-taking area of a camera is not targeted by AF, but only an object within a part of the image-taking area is targeted. In AF adopting the contrast method, image signals within the area targeted by AF are extracted from among image signals acquired from the entire image pickup area of the image sensor, and, by controlling the focus so that the contrast of the extracted image signals within the targeted area may be the highest, the target of AF is limited to the object within the partial area. In the present invention, the area of an object targeted by AF within the image-taking area of a camera, or an area on a screen of an object targeted by AF within the screen area of an image taken by a camera when the image is reproduced is referred to as an AF area, and the frame indicating the outline is referred to as an AF frame.

In the case where a single AF area is fixedly set at a predetermined position within the image-taking area, a rectangular AF area is set at the central part of the image-taking area as a standard. However, there is also known an auto focus system in which the position of the AF area can be changed by specification of an operator. When the position of the AF area is changed by operating the manual operation member of a controller in a TV camera or the like, a track ball, a joystick or the like capable of instructing vertical and horizontal movement of the AF area is used (see Japanese Patent Application Laid-Open Nos. 05-37843 and 2002-365519, for example).

### SUMMARY OF THE INVENTION

In a system which enables an operator to operate the manual operation member of a controller to change the position of an AF area, the operator may want, after setting the AF area at a desired position, to continuously or temporarily fix (keep) the position of the AF area. However, in conventional systems, the operator must be careful not to move the manual operation member in order to fix the AF area, but that he may move it by mistake. Therefore, there is a possibility that the AF area may be moved unintentionally and it may cause trouble in image taking.

There may also be a case that the operator wants, after moving the AF area from the initial position, for example, the center of the image-taking area to a desired position, to instantaneously return the AF are to the initial position. However, in conventional systems, the operator has to operate the controller to return the AF area to the initial position the same as he did when moving the AF area from the initial position to the different position, which presents a problem that the AF area cannot be instantaneously returned.

The present invention has been made in consideration of the above situation, and its object is to provide an auto focus system capable of securely keeping the AF area at a predetermined position and instantaneously returning the AF area which has been moved to a position different from the initial position to the initial position.

In order to achieve the above object, an auto focus system according to a first aspect of the present invention is characterized by comprising: an auto focus device which automatically focuses an object within a range of an AF area, a part of an image-taking area of a camera; an AF area operation device which moves a position of the AF area based on operation of a manual operation member; and a switching device which switches the movement of the AF area based on operation of the manual operation member to be effective or ineffective.

According to the first aspect, movement of the AF area by the AF area operation device can be made ineffective, and thereby, even if the operator moves the manual operation member by mistake, the AF area does not move, and the AF area can be securely kept at a predetermined position.

An auto focus system according to a second aspect of the present invention is characterized by comprising: an auto focus device which automatically focuses an object within a range of an AF area, a part of an image-taking area of a camera; an AF area operation device which moves a position of the AF area based on operation of a manual operation member; and a reset device which returns the position of the AF area to a predetermined initial position.

According to the second aspect, it is possible to instantaneously return the AF area which has been moved to a position different from the initial position, to the initial position by the reset device.

An auto focus system according to a third aspect of the present invention is the invention of the second aspect, further comprising: a switching device which switches the movement of the AF area based on operation of the manual operation member to be effective or ineffective. The third aspect has the effects of both of the first and second aspects.

An auto focus system according to a fourth aspect of the present invention is the invention of the third aspect, wherein, if the movement of the AF area based on operation of the manual operation member of the AF area operation device is made ineffective by the switching device, the reset device is also made ineffective. According to the fourth aspect, it is possible to effectively keep the AF area at a predetermined position even if operation of the reset means to return the AF area to the initial position is performed by mistake.

By means of the auto focus system according to the present invention, it is possible to keep the AF area at a predetermined position and instantaneously return the AF area which has been moved to a position different from the initial position to the initial position.

### BRIEF DESCRIPTION OF THE DRAWINGS

Fig. 1 is a block diagram showing the entire configuration of an image pickup system to which an auto focus system according to the present invention is applied;
Fig. 2 shows an AF frame;
Fig. 3 is a flowchart showing a procedure to be performed by an AF area controller in response to operation of an the AF area control effective/ineffective switch; and
Fig. 4 is a flowchart showing a procedure to be performed by the AF area controller in response to operation of an AF area reset switch.

### DETAILED DESCRIPTION OF THE PREFERRED EMBODIMENTS

An embodiment of an auto focus system according to the present invention will be described below in detail with reference to accompanying drawings.

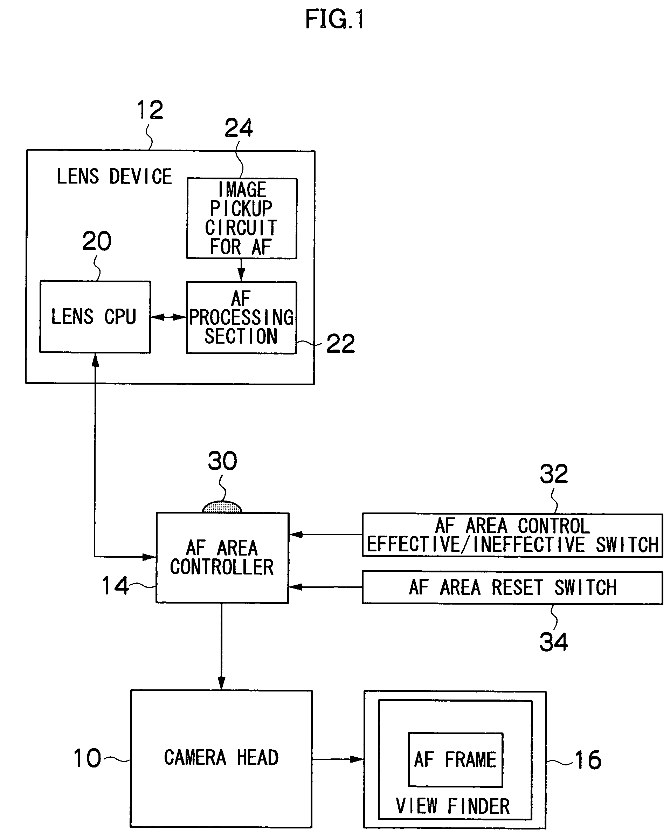

Fig. 1 is a block diagram showing the entire configuration of an image pickup system to which an auto focus system according to the present invention is applied. The image pickup system shown in Fig. 1 is, for example, an image pickup system used for image taking by a TV camera for broadcast. And Fig. 1 shows a lens-exchangeable camera head 10, a lens device 12 provided with image taking lenses (an optical system) to be mounted on a lens mount of the camera head 10, an AF area controller 14, and the like.

The camera head 10 is mounted with an image sensor (for example, a CCD), a required signal processing circuit and the like. An image formed by the image taking lenses of the lens device 12 is photoelectrically converted by the image sensor, and after that, required signal processing is performed therefor by the signal processing circuit. A picture signal in a predetermined format, which is generated by the signal processing circuit, is outputted from a picture signal output terminal or the like of the camera head 10 to external equipment. The camera head 10 is also provided with a view finder (monitor) 16 for confirmation of composition. The picture signal from the camera head 10 is given to the view finder 16, and a real-time image (picture) being taken by the camera head 10 is displayed on the screen of the view finder 16. On the screen of the view finder 16, there is also displayed information such as an AF frame indicating the range of the AF are targeted by auto focus (AF).

The lens device 12 is provided with image taking lenses (an optical system) not shown to be mounted on the lens mount of the camera head 10, and an image of an object is formed by the image taking lenses on the image-taking surface of the image sensor of the camera head 10. For the image taking lenses, there are provided movable sections for adjusting image-taking conditions, such as a focus lens group, a zoom lens group, and a diaphragm as components, and these movable sections are electrically driven by a motor (servo-mechanism) not shown. For example, the focus lens group and the zoom lens group move in the optical axis direction. Focus (object distance) adjustment is performed by movement of the focus lens group, and focal length (zoom magnification) adjustment is performed by movement of the zoom lens group. In a system related to auto focus like this embodiment, it is sufficient if at least the focus lens group is electrically driven, and other movable sections may be only manually driven. When a predetermined movable section is electrically driven in accordance with operation of an operator, the operation of the movable section is controlled based on a control signal outputted from an operation section (such as the operation section of a controller connected to the lens device 12) not shown, in accordance with operation of the operator, though the details thereof are omitted.

As shown in Fig. 1, the lens device 12 is mounted with a lens CPU 20 which performs overall control of the entire lens device 12, an AF processing section 22 which performs auto focus (AF) processing, an image pickup circuit for AF 24 and the like. The image pickup circuit for AF 24 is arranged in the lens device 12 to acquire a picture signal for AF processing and is provided with an image sensor (such as a CCD), a processing circuit for outputting an output signal from the image sensor as a picture signal in a predetermined format, and the like. The image sensor of the image pickup circuit for AF 24 is referred to as an image sensor for AF. The picture signal outputted from the image pickup circuit for AF 24 is assumed to be a luminance signal.

On the image pickup surface of the image sensor for AF, there is formed an image from the object light branched from the object light which enters the image sensor of the camera head 10 by means of a half mirror or the like arranged on the optical path of the image taking lenses. The image-taking area and the object distance (the distance at which an object is focused) for the image pickup area of the image sensor for AF is configured to correspond to the image-taking area and the object distance for the image pickup area of the image sensor of the camera head 10, and the object image acquired by the image sensor for AF corresponds to the object image acquired by the image sensor of the camera head 10. Both image-taking areas do not have to completely correspond to each other. For example, any one of the image-taking area of the image sensor for AF and the image-taking area of the image sensor of the camera head 10 may be large enough to include the other. The image sensor for AF may not be provided, and a picture signal from the camera head 10 may be given to the AF processing section 22.

The AF processing section 22 acquires picture signals from the image pickup circuit for AF 24, and calculates a focus evaluation value indicating height of contrast of an object image based on the picture signals. For example, after high-frequency component signals among picture signals obtained from the image sensor for AF are extracted by means of a highpass filter, signals within the range corresponding to the AF area which is targeted by AF, among the high-frequency component signals, are integrated for each screen. The integrated value obtained for each screen as described above indicates height of contrast of the object image, and it is given to the lens CPU 20 as a focus evaluation value. The range of the AF area is specified by the lens CPU 20 as described later.

The lens CPU 20 acquires information indicating the range of the AF area (AF area information) from the AF area controller 14, and specifies the range of the AF area specified by the AF area information to the AF processing section 22, the details of which will be described later. Then, the focus evaluation value determined by the image (picture signals) corresponding to the AF area is acquired from the AF processing section 22, and the focus lens group is controlled so that the acquired focus evaluation value may be the largest (maximum), that is, the contrast of the object image in the AF area may be the highest. For example, a mountain climbing method is generally known as a method for controlling a focus lens group based on a focus estimation value. In this method, the focus lens group is moved in the direction of increase in the focus estimation value, and when a point at which the focus estimation value starts to decrease is detected, the focus lens group is set at that point. Thereby, the object within the AF area is automatically focused.

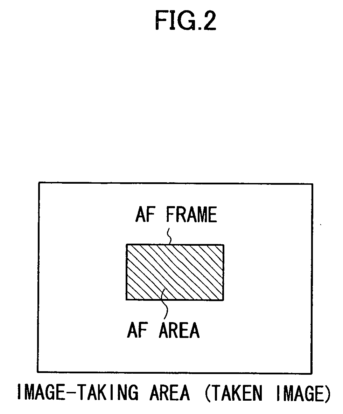

The AF area controller 14 is provided with a manual operation member which enables the operator to specify the range of the AF area, such as the position, form, size and the like of the AF area. As shown in Fig. 2, the AF area indicates the image-taking area of the image sensor of the camera head 10 or an area on the screen showing a taken image, which is targeted by AF, and the frame indicating the outline of the area is the AF frame. When the manual operation member is operated by the operator, the AF area controller 14 sets or changes the range of the AF area (such as the position) in accordance with the operation.

In this embodiment, the form of the AF area is limited to a rectangle; the size of the AF area is assumed to be constant; and a track ball 30 is provided as the manual operation member for changing only the position of the AF area. As the manual operation member for changing the position of the AF area, any operation member such as a joystick may be used in addition to a track ball. Change of the position of the AF area by the track ball 30 of the AF area controller 14 is performed, for example, by relative position control, and is performed by vertically or horizontally displacing the AF area in the direction and by the movement amount, the direction and the movement amount corresponding to the rotation direction and the rotation amount of the track ball 30 relative to a position of the AF area at a particular point of time. If a point which determines the position of the AF area (in this embodiment, the central position of the rectangular AF area) within the image-taking area (the screen showing a taken image) is referred to as an AF point, the position of the AF area is determined by setting the position of the AF point.

The AF area controller 14 sends AF area information indicating the range of the AF area set or changed in accordance with operation of the operator to the lens CPU 20 in response to a request from the lens CPU 20. Thereby, the range targeted by AF is set to the range of the AF area set or changed by the AF area controller 14.

The AF area controller 14 also sends the AF area information to the camera head 10, and causes the AF frame to be displayed at a corresponding position on the screen of the view finder 16. Thereby, the operator can recognize the position and the like of the AF area at that time by viewing the view finder 16.

The AF area controller 14 is given a state signal from an AF area control effective/ineffective switch 32 or an AF area reset switch 34. These switches 32 and 34 may be arranged in a device different from the AF area controller 14, or may be arranged in the AF area controller 14.

The AF area control effective/ineffective switch 32 is a switch for switching operation of the track ball 30 by the AF area controller 14 to be effective/ineffective. If the switch 32 is set to "on" (effective), the AF area controller 14 (operation of the track ball 30) is effective, and the position of the AF area is changed in accordance with operation of the track ball 30. On the other hand, if the switch 32 is set to "off" (ineffective), operation of the track ball 30 is ineffective, and the position of the AF area when the switch 32 is switched from "on" to "off" is kept irrespective of whether the track ball 30 is operated or not. Thereby, even if the operator moves the track ball 30 by mistake, the AF area can be kept at a desired position.

The AF area reset switch 34 is a switch for resetting the position of the AF area to the initial position. If the AF area reset switch 34 is turned on, the AF area controller 14 returns the position of the AF area to the initial position. For example, the center (the central position) of the image-taking area is set as the initial position. Accordingly, even when the AF area has moved to a position different from the initial position, the AF area can be instantaneously returned to the initial position by turning on the AF area reset switch 34.

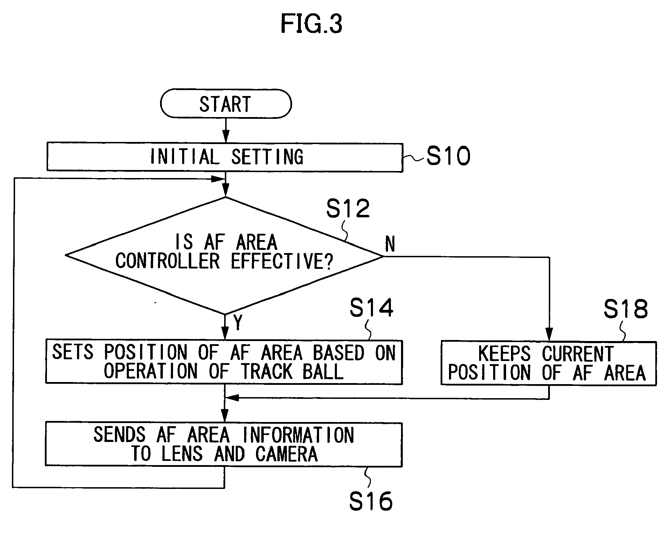

Fig. 3 is a flowchart showing a procedure to be performed by the AF area controller 14 (the CPU of the AF area controller 14) in response to operation of the AF area control effective/ineffective switch 32. Starting the processing, the AF area controller 14 first performs required initial setting (step S10), and then it detects whether the AF area control effective/ineffective switch 32 is on or not to determine whether the AF area controller 14 is effective or not (step S12). If YES is determined, then the AF area controller 14 sets or changes the position of the AF area based on operation of the track ball 30 (step S 14), and sends AF area information indicating the range of the AF area for which the position and other elements (size and form) are considered, to the camera head 10 and the lens device 12 in response to a request (step S16). Then, the procedure returns to step S12.

On the other hand, if NO is determined at step S12, then the current position (range) of the AF area is kept (step S 18). If the AF area controller 14 has been effective, the current range of the AF area is the range of the AF area set at step S 14 before the step S 18 (set last). If the AF area controller 14 has not been effective at all since the processing was started, the current range of the AF area is the range of the AF area for which the initial position set by the initial setting at step S 10 and other elements (size and form) are considered. Subsequently, the AF area controller 14 sends AF area information indicating the current range of the AF area to the camera head 10 and the lens device 12 in response to a request (step S16), and returns to step S12.

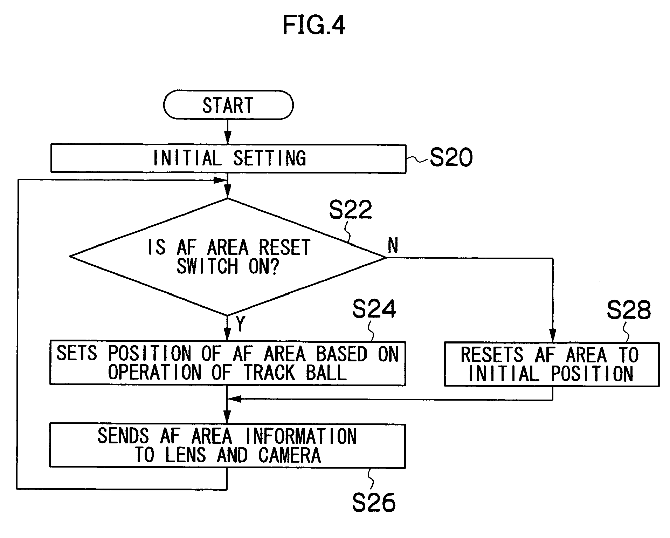

Fig. 4 is a flowchart showing a procedure to be performed by the AF area controller 14 (the CPU of the AF area controller 14) in response to operation of the AF area reset switch 34. Starting the processing, the AF area controller 14 first performs required initial setting (step S20) and then determines whether the AF area reset switch 34 is on or not (step S22). If NO is determined, then the AF area controller 14 sets or changes the position of the AF area based on operation of the track ball 30 (step S24), and sends AF area information indicating the range of the AF area for which the position and other elements (size and form) are considered, to the camera head 10 and the lens device 12 in response to a request (step S26). Then, the procedure returns to step S22.

On the other hand, if YES is determined at step S22, then the AF area controller 14 returns the position of the AF area to the initial position (for example, the central position of the image-taking area) (step S28), sends AF area information indicating the range of the AF area for which the position and other elements (size and form) are considered, to the camera head 10 and the lens device 12 in response to a request (step S26), and returns to step S22.

The flowcharts in Figs. 3 and 4 have been shown as independent procedures. Actually, however, both procedures are incorporated in a series of procedures to be performed by the AF area controller 14. In this case, when the AF area reset switch 34 is turned on while the AF area controller 14 is ineffective (the AF area control effective/ineffective switch 32 is off), the operation may be also made ineffective to keep the position of the AF area without resetting the position to the initial position. Alternatively, even if the AF area controller 14 is ineffective, operation of the AF area reset switch 34 may be effective so that the position of the AF area may be reset to the initial position.

In the above-described embodiment, effectiveness/ineffectiveness of operation can be switched only for the position of AF area among the elements which determine the range of the AF area, and the position can be reset to the initial position. However, for other elements (size and form) also, effectiveness/ineffectiveness of operation may be switched similarly, and the condition may be reset to the initial condition.

Furthermore, in the above-described embodiment, the lens device 12, the AF area controller 14 and the tracking device 16 are shown as separate devices. However, any two or all of them may be an integrated device.

Furthermore, in the above-described embodiment, a picture signal for AF is acquired by an image sensor dedicated for AF which is different from the image sensor of the camera head 10. However, a picture signal acquired by the image sensor of the camera head 10 may be used for AF.

## Claims

1. An auto focus system, **characterized by** comprising:
an auto focus device (20, 22, 24) which automatically focuses an object within a range of an AF area, a part of an image-taking area of a camera;
an AF area operation device (14) which moves a position of the AF area based on operation of a manual operation member (30); and
a switching device (32) which switches the movement of the AF area based on operation of the manual operation member (30) to be effective or ineffective.

2. An auto focus system, **characterized by** comprising:
an auto focus device (20, 22, 24) which automatically focuses an object within a range of an AF area, a part of an image-taking area of a camera;
an AF area operation device (14) which moves a position of the AF area based on operation of a manual operation member (30); and
a reset device (34) which returns the position of the AF area to a predetermined initial position.

3. The auto focus system according to claim 2, further comprising:
a switching device (32) which switches the movement of the AF area based on operation of the manual operation member to (30) be effective or ineffective.

4. The auto focus system according to claim 3, wherein, if the movement of the AF area based on operation of the manual operation member (30) of the AF area operation device (14) is made ineffective by the switching device (32), the reset device (34) is also made ineffective.
